# EUROPÄISCHE PATENTSCHRIFT

(11) **EP 2 093 110 B1**
(45) Veröffentlichungstag und Bekanntmachung des Hinweises auf die Patenterteilung: **18.04.2012**
(21) Anmeldenummer: 09100111.5
(22) Anmeldetag: 13.02.2009
(51) Int. Cl.: B60T 7/04, B60T 8/88, B60T 13/74

(54) **Parkbremse**
Parking brake
Frein de stationnement

(30) Priorität: 20.02.2008 DE 102008009946
(43) Veröffentlichungstag der Anmeldung: 26.08.2009
(73) Patentinhaber: KNORR-BREMSE Systeme für Nutzfahrzeuge GmbH, 80809 München (DE)
(72) Erfinder: Stöhr, Markus, 80933 München (DE)
(74) Vertreter: Schönmann, Kurt

(56) Entgegenhaltungen:
- DE-A1-102004 043 309
- DE-A1-102005 001 234
- DE-A1-102005 022 400
- US-A- 4 546 298
- US-A1- 2007 068 749

## Beschreibung

Die Erfindung bezieht sich auf eine Parkbremse für Nutzfahrzeuge gemäß dem Oberbegriff des Patentanspruches 1.

Eine solche Parkbremse ist aus der DE 10 2005 001 234 A1 bekannt. Diese Parkbremse hat einen in einem Zylindergehäuse verschieblichen Kolben und ein Kolbenrohr zum Betätigen einer Bremse. Zur Realisierung einer Parkbremsfunktion dient ein in das Kolbenrohr hineinragender feststehender Gewindebolzen, der mit seinem oberen Ende am Zylindergehäuse befestigt ist. Auf dem Gewindebolzen läuft eine Klemmutter, welche mit einem gabelförmigen, axial drehbaren Mitnehmer, der in die Klemmutter eingreift, verstellbar ist. Der Mitnehmer ist mit einem Antrieb versehen, der auch einen Elektromotor sein kann.

Die DE 10 2004 043 309 A1 zeigt eine hydraulische Feststellbremsvorrichtung mit einem durch einen federvorgespannten Bremskolben, der mittels einer von einem Elektromotor angetriebenen Gewindemutter-Spindel-Anordnung verriegelbar ist.

Aus Bosch, Kraftfahrtechnisches Taschenbuch, 22. Auflage, Düsseldorf, VDI-Verlag, 1995, S. 248 ist eine Parkbremse (auch Feststellbremse genannt) für Nutzfahrzeuge mit einem Federspeicher-Bremszylinder bekannt, der aufgrund der Federkraft die Bremse anlegt und bei der die Bremse durch Druckluft gelöst und in der Lösestellung gehalten wird. Die Druckluft wird dabei auf einem verschieblichen Kolben, der die Feder spannt. Die Betätigungseinrichtung für diese Parkbremse besteht dabei aus einem pneumatischen Ventil, das üblicherweise im Fahrerhaus angeordnet ist. Bei Anhängerfahrzeugen kann auch vorgesehen sein, daß die Parkbremse automatisch angelegt wird, sobald eine Druckleitung zwischen Zugfahrzeug und Anhänger getrennt wird. Nachteil von rein pneumatisch arbeitenden Parkbremsen ist die aufwendige Verlegung von Druckluftleitungen sowie die Notwendigkeit eines pneumatischen Steuerventils.

Aufgabe der Erfindung ist es, die Parkbremse der eingangs genannten Art dahingehend zu verbessern, daß sie vereinfacht ist und auch für die Fahrtstellung, bei der die Feder gespannt und die Parkbremse gelöst ist, keinen Haltestrom benötigt.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Nach der Erfindung ist der elektromotorische Antrieb über ein Zugorgan oder ein Gestänge so mit dem verschieblichen Kolben verbunden, daß die Kombination aus Zugorgan bzw. Gestänge und Antrieb eine Übertotpunktstellung einnimmt. Damit wird erreicht, daß für die Fahrtstellung, bei der die Feder gespannt und die Parkbremse gelöst ist, kein Haltestrom benötigt wird.

Nach einer anderen Weiterbildung der Erfindung ist der elektromotorische Antrieb ein Getriebemotor mit selbsthemmendem Getriebe, wie z.B. einem Scheckengetriebe. Auch hier wird kein Haltestrom für die Lösestellung benötigt.

Für den Fall, daß ein automatisches Aktivieren der Parkbremse bei Zugtrennung erfolgen soll, was beispielsweise bei Anhängerfahrzeugen erwünscht ist, sieht eine Weiterbildung der Erfindung vor, daß die Parkbremse eine elektronische Steuerung mit eigener elektrischer Energieversorgung aufweist, die bei Ausfall der Bordnetzspannung die Parkbremse automatisch aktiviert. Hierzu wird nur eine geringe Energie benötigt, um beispielsweise den elektromotorischen Antrieb mit dem Gestänge über die Übertotpunktstellung zurückzubewegen, wobei die weitere Bewegung des Kolbens zum Anlegen der Bremse dann durch die Feder bewirkt wird.

Im folgenden wird die Erfindung anhand von Ausführungsbeispielen im Zusammenhang mit der Zeichnung ausführlicher erläutert. Es zeigt:
- Figur 1: eine geschnittene Prinzipskizze der Parkbremse nach einem ersten Ausfüh- rungsbeispiel in der Parkstellung;
- Figur 2: dieselbe Parkbremse in der Lösestel- lung.

Die Parkbremse 1 hat ein Gehäuse 2, in dem ein Kolben 3 mit einer Kolbenstange 4 verschieblich geführt ist. Die Kolbenstange 4 betätigt in bekannter Weise Bremsorgane, wie z.B. Bremsbacken. Der Kolben 3 ist durch eine Feder 5 vorgespannt, wobei sich die Feder 5 einerseits am Gehäuse und andererseits am Kolben 3 abstützt.

Der Kolben 3 ist über ein Zugorgan 6, das hier eine Stange ist, mit einem Elektromotor 7 gelenkig gekoppelt. Wird eine Stange verwendet, so ist ihr eines Ende über ein erstes Gelenk 8 mit dem Kolben und über ein zweites Gelenk 9 mit dem Elektromotor 7 verbunden, wobei das zweite Gelenk 9 exzentrisch zur Drehachse des Elektromotors 7 angebracht ist, beispielsweise an einer drehbaren Scheibe 10 oder einem drehfest mit dem Elektromotor 7 verbundenen Hebel 11.

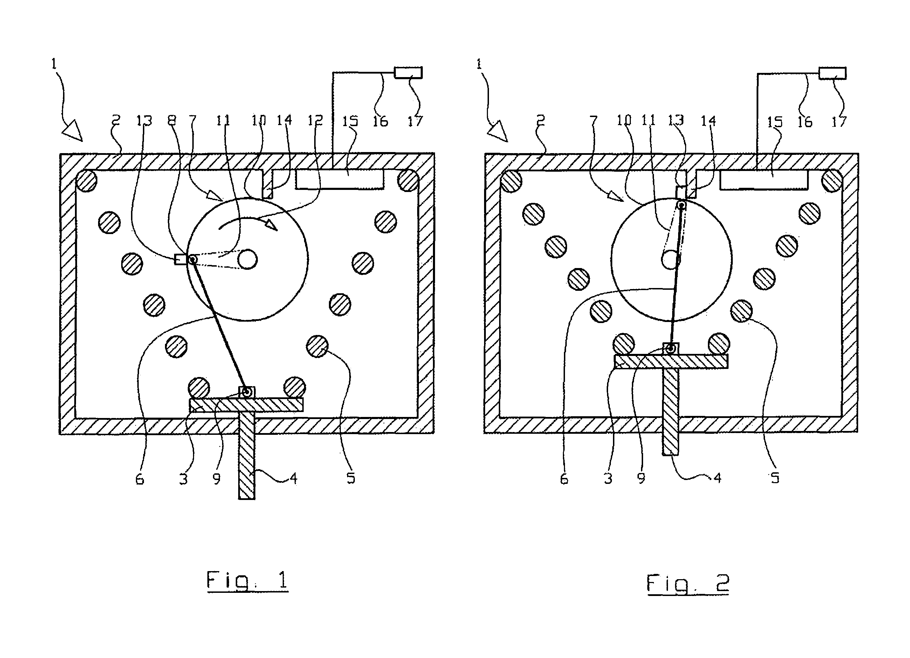

Wird der Elektromotor 7 in der in Figur 1 dargestellten Stellung in Richtung des Pfeiles 12 drehangetrieben, so werden der Kolben 3 und die Kolbenstange 4 in das Gehäuse 2 hineingezogen und die Feder 5 wird gespannt.

An der Scheibe 10 bzw. dem Hebel 11 ist ein Vorsprung 13 angebracht, der mit einem am Gehäuse 2 angebrachten Anschlag 14 zusammenwirkt und wie aus Figur 2 zu erkennen ist, die Drehung begrenzt und zwar in solcher Lage, daß das Zugorgan 6 in eine "Übertotpunktstellung" gelangt, in welcher eine gerade Verbindungslinie zwischen den beiden Gelenken 8 und 9 gegenüber der Drehachse des Elektromotors 7 die Seite gewechselt hat. In der Darstellung der Figur 1 liegt diese Verbindungslinie links von der Drehachse, während sie in Figur 2 rechts von der Drehachse liegt und diese somit in der "Totpunktstellung" gerade geschnitten hat, während sie in der Übertotpunktstellung die Seite gewechselt hat.

Die Übertotpunktstellung der Figur 2 ist aufgrund der Kraft der Feder 5 stabil, da durch die Übertotpunktstellung ein Drehmoment auf den Elektromotor ausgeübt wird, der Drehrichtung des Pfeiles 12 der Figur 1 entgegengesetzt. Diese Übertotpunktstellung wird durch den Vorsprung 13 und den Anschlag 14 stabilisiert, so daß kein Haltestrom für den Elektromotor 7 erforderlich ist.

Zum Lösen der Parkbremse muß der Elektromotor 7 entgegen der Richtung des Pfeiles 12 der Figur 1 kurzfristig drehangetrieben werden, bis die beschriebene Totpunktlage überschritten ist. Anschließend wirkt die Feder 5 und drückt den Kolben 3 und die Kolbenstange 4 in die Parkbremsstellung.

Zur Steuerung des Elektromotors 7 kann ein Steuergerät 15 vorgesehen sein, daß im Gehäuse 2 oder außerhalb des Gehäuses 2 angeordnet sein kann. Das Steuergerät 15 ist über eine elektrische Leitung 16 und ggf. eine Anschlußklemme 17 ansteuerbar.

Über das Steuergerät 15 kann der Elektromotor 7 in beiden Drehrichtungen angetrieben werden, zum Anlegen und Lösen der Parkbremse.

Für bestimmte Anwendungsfälle, bei denen ein automatisches Anlegen der Parkbremse gewünscht ist, kann das Steuergerät 15 eine elektronische Schaltung mit einer eigenen Energieversorgung aufweisen. Die Energieversorgung kann ein Akkumulator oder auch ein Kondensator sein. Die elektronische Schaltung überwacht dann, ob eine Bordnetzspannung vorhanden ist und aktiviert bei Ausfall der Bordnetzspannung einen Drehantrieb des Elektromotors 7 in Richtung eines Anlegens der Bremse. Hierzu muß der Elektromotor 7 nur kurzfristig angetrieben werden, um die in Figur 2 dargestellte Übertotpunktstellung zu überwinden, worauf anschließend das Anlegen der Bremse allein unter Wirkung der Feder 5 erfolgt.

Abschließend sei darauf hingewiesen, daß selbstverständlich auch andere Antriebsarten möglich sind, beispielsweise ein Elektromotor, der über ein Ritzel eine Zahnstange antreibt, ein Elektromotor, der eine Seilwinde für das Zugorgan 6 antreibt, das dann ein flexibler Draht oder ähnliches ist, sowie jegliche sonstige elektromotorischen Antriebe, die eine Linearverschiebung des Kolbens 3 und der Kolbenstange 4 bewirken können.

Zusammengefaßt erreicht man mit der Erfindung wesentliche Vorteile. Der Bauraumbedarf gegenüber herkömmlichen Federspeicherbremsen ist geringer. Der Aufwand für die Verlegung von Druckluftleitungen wird vermieden. Es werden keine aktiven Verriegelungseinheiten benötigt, um die Parkbremse gelöst zu halten.

## Patentansprüche

1. Parkbremse mit einem Federspeicher, der einen von einer Feder (5) beaufschlagen verschieblichen Kolben (3) aufweist und einen Elektromotor (7), der über ein Zugorgan (6) mit dem Kolben (3) verbunden und so angeordnet ist, daß er den Kolben (3) gegen die Kraft der Feder (5) verschiebt, **dadurch gekennzeichnet, daß** der Elektromotor (7) einen Drehbegrenzungsanschlag (13, 14) aufweist und daß das Zugorgan (6) bei Erreichen des Drehbegrenzungsanschlages (13, 14) in einer Übertotpunktstellung ist.

2. Parkbremse nach Anspruch 1, **dadurch gekennzeichnet, daß** der Elektromotor (7) ein Getriebemotor mit einem selbsthemmenden Getriebe ist.

3. Parkbremse nach einem der Ansprüche 1 oder 2, **dadurch gekennzeichnet, daß** sie ein elektrisches Steuergerät (15) aufweist, welches eine eigene elektrische Energieversorgung hat und daß das Steuergerät (15) so ausgebildet ist, daß es bei Ausfall einer Bordnetzspannung den Elektromotor (7) in Richtung zu einer Parkstellung der Parkbremse antreibt.

## Claims

1. Parking brake comprising a spring-loaded means including a displaceable piston (3) upon which a spring (5) acts and an electric motor (7) connected to said piston (3) via a traction component (6) and being so disposed that it displaces said piston (3) in opposition to the force of said spring (5), **characterized in that** said electric motor (7) comprises a rotation-limiting stop (13, 14) and that said traction component (6) is in a position beyond the dead centre when it reaches said rotation-limiting stop (13, 14).

2. Parking brake according to Claim 1, **characterized in that** said electric motor is a gear motor provided with a self-locking transmission.

3. Parking brake according to any of the Claims 1 or 2, **characterized in that** it comprises an electric controller device (15) that is provided with its own electrical energy supply and that said controller device (15) is so designed that it drives said electric motor (7) in a direction towards a parking position of said parking brake when an on-board main voltage fails.

## Revendications

1. Frein de stationnement comprenant un accumulateur à ressort, qui renferme un piston déplaçable (3) sur lequel agit un ressort (5), et un moteur électrique (7) relié audit piston (3) via un composant de traction (6) et étant disposé d'une telle façon, qu'il déplace ledit piston (3) en sens inverse de l'effort dudit ressort (5), **caractérisé en ce que** ledit moteur électrique (7) comprend un arrêt limiteur de rotation (13, 14) et **en ce que** ledit composant de traction (6) se trouve en une position au-delà du point mort, quand il arrive audit arrêt limiteur de rotation (13, 14).

2. Frein de stationnement selon la revendication 1, **caractérisé en ce que** ledit moteur électrique est un motoréducteur pourvu d'un train d'engrenages à blocage automatique.

3. Frein de stationnement selon une quelconque des revendications 1 ou 2, **caractérisé en ce qu'**il comprend un dispositif de commande électrique (15), qui est doté de son alimentation propre d'énergie électrique, et **en ce que** ledit dispositif de commande (15) est conçu d'une telle manière, qu'il commande ledit moteur électrique (7) en un sens vers la position de stationnement dudit frein de stationnement au cas de défaillance de tension de réseau à bord.
